# EUROPÄISCHE PATENTSCHRIFT

(11) **EP 3 404 143 B1**
(45) Veröffentlichungstag und Bekanntmachung des Hinweises auf die Patenterteilung: **08.09.2021**
(21) Anmeldenummer: 18172589.6
(22) Anmeldetag: 16.05.2018
(51) Int. Cl.: E01C 7/20, E01C 7/24

(54) **BITUMINÖSER BAUSTOFF**
BITUMINOUS BUILDING MATERIAL
MATÉRIAU DE CONSTRUCTION BITUMINEUX

(30) Priorität: 19.05.2017 AT 504262017
(43) Veröffentlichungstag der Anmeldung: 21.11.2018
(73) Patentinhaber: ÖSTERREICHISCHE VIALIT GESELLSCHAFT mbH, 5280 Braunau/Inn (AT)
(72) Erfinder: Bruckbauer, Alexander, 5280 Braunau am Inn (AT)
(74) Vertreter: Puchberger & Partner Patentanwälte

(56) Entgegenhaltungen:
- EP-A1- 1 004 704
- WO-A1-2016/005583
- AT-U1- 388
- DE-A1-102013 021 032
- FR-A1- 3 020 074
- US-A1- 2013 195 552

## Beschreibung

Die Erfindung betrifft einen bituminösen Baustoff, der kalt herstellbar und einbaufähig ist und der ein Feststoffgranulat und Bindemittel enthält.

Weiters betrifft die Erfindung ein Verfahren zur Herstellung einer Asphaltdeckschicht für Straßen und Wege.

Straßen bestehen vorwiegend aus dem Werkstoff Asphalt, das ist eine Abmischung aus frischem Gesteinsmaterial und Bitumen, der in entsprechender Schichtdicke, abgestimmt auf die zu erwartende Verkehrsbelastung, auf einem geeigneten Paket ungebundener Schichten aus Gesteinsmaterialien aufgebracht wird.

Bei Asphaltschichten ist zwischen Trag- und Deckschichten zu unterscheiden.

Tragschichten müssen einen guten Verformungswiderstand aufweisen, sind daher tendenziell grobkörnig mit einem Größtkorn bis 32 mm, sowie bindemittelarm und müssen relativ dick sein, da es auf die lastverteilende Wirkung ankommt. Sie sind bei hoher Verkehrsbelastung auch mehrschichtig und insgesamt bis zu etwa 25 cm dick.

Deckschichten müssen eine gute Befahrbarkeit und Wasserresistenz aufweisen, sind daher tendenziell feinkörnig mit einem Größtkorn von 5 bis 16 mm, sowie bindemittelreicher und sollten nicht zu dick sein, da sie sonst unzureichend wasserdicht/frostbeständig oder verformungsanfällig sind. In der Regel werden Deckschichten je nach Bauverfahren zwischen 1 und 4 cm dick eingebaut.

Ein gut ausgebautes Straßennetz in den Industrieländern ist relativ dicht und hat beispielsweise in einem kleinen Land wie Österreich immerhin eine Fläche von rund einer Milliarde Quadratmeter. Geht man von einer mittleren Schichtdicke jener Asphaltschichten, die in regelmäßigen Zyklen von 20 Jahren zu erneuern sind, von etwa 10 cm entsprechend 240 kg/m² Asphalt, aus, müssten je Jahr etwa 12 Millionen Tonnen Asphalt erneuert werden.

Es ist daher von enormer volkswirtschaftlicher Bedeutung, einerseits für die Erhaltungsarbeiten möglichst dünne Schichten verwenden zu können und andererseits den bei der Erneuerung der Schichten anfallenden Altasphalt für die Neuherstellung der Schichten wiederverwenden zu können.

Für den Bau von Tragschichten wird in der Asphaltbauweise vorwiegend die Heißasphalt-Technologie eingesetzt, das heißt das Asphaltmischgut wird mit einer relativ hohen Temperatur von 180 °C gemischt und mit mindestens 130 °C eingebaut. Auch Deckschichten werden hauptsächlich in dieser Bauweise ausgeführt. Da die Gesteinsmaterialien dafür auch getrocknet werden müssen, erfordern die Bauverfahren insgesamt einen hohen Energieeinsatz von bis zu 10 Liter Heizöl (oder Äquivalenten anderer Primärenergien) pro Tonne Mischgut.

Bei der Erneuerung von Asphaltschichten fallen aber auch große Mengen an Reststoffen an. Da aufgrund einer Höhengebundenheit im Straßenkörper die Schichten nicht beliebig übereinandergelegt werden können, müssen die überalterten Schichten zunächst ausgebaut werden, heutzutage zumeist durch Wegfräsen. Die möglichst hochwertige Wiederverwendung dieses Recyclingasphaltes anstatt ihn als Abfall zu deponieren, ist daher eine sehr aktuelle Herausforderung. Bisher erfolgt die Wiederverwendung fast ausschließlich ebenfalls mittels der Heißasphalt-Technologie, was entweder aufwändige Mischanlagenkonzepte wie die Paralleltrommeltechnik erfordert oder in einer herkömmlichen Mischanlage nur relativ niedrige Zugabemengen von bis zu 20 % Recyclingasphalt möglich sind.

Für den Bau von Deckschichten haben sich aber auch kalt durchführbare Bauverfahren etabliert, wie die "Oberflächenbehandlung (OB)" (Regelbauweise gemäß EN 12271) und die sogenannten "kalteinbaufähigen Dünnschichtdecken (DDK)" (Regelbauweise gemäß EN 12273). Erstere werden vorwiegend auf Straßenkategorien mit nicht zu hoher Verkehrsbelastung eingesetzt, letztere können auch auf hochbelasteten Straßen angewendet werden.

Die Verwendung von Recyclingmaterialien in OB-Verfahren wird beispielsweise in der WO 2016/005583 A1, der US 2013/195552 A1 und der FR 3 020 074 A1 beschrieben.

Die EP 1 004 704 A1 beschreibt den Einsatz von Polymermaterialien in Straßenbelägen. Die DE 10 2013 021 032 offenbart die Verwendung von bitumenummanteltem Gesteinsgranulat bei der Herstellung von kalt herstellbaren bituminösen Baustoffen.

DDK werden gemäß Stand der Technik aus Bindemitteln in Form einer kationischen Bitumenemulsion (gemäß EN 13808) hergestellt, was grundsätzlich die kalte Bauweise ohne weitere Energiezufuhr, also die Ausführbarkeit bei Umgebungstemperatur (von Frühjahr bis Herbst, also Temperaturen von etwa + 10 °C bis etwa + 35 °C) ermöglicht.

Diese Bauweise wird in Österreich in der RVS 08.16.05 beschrieben. Die Bitumenemulsionen bestehen aus Wasser, Spezialbitumen aus hochwertigen naphtenischen (im Gegensatz zu paraffinischen) Rohölprovenienzen und einem stabilisierenden Emulgatorsystem, das exakt auf die Gesteinsmaterialien abzustimmen ist. Ein für ein DDK-Verfahren geeignetes Fluxbitumen wird in AT 388 U1 beschrieben.

Etwa 10 % Bitumenemulsion (wird je nach Größtkorn und lokalen Anforderungen wie Verkehrs-Lastklasse, Klima etc. in einem großzügigen Rahmen von mehreren % variiert) werden üblicherweise mit etwa 90 % kornabgestuftem Gesteinsmaterial in einer selbstfahrenden Arbeitsmaschine gemischt und in einem Verteilerkasten in dünner Schicht von 0,5 bis 2 cm Dicke auf die zu bearbeitende Straßenunterlage in Form einer breiförmigen "Asphaltschlämme" verlegt. Das Gesteinsmaterial muss in Abstimmung auf dessen Größtkorn sowie dessen chemische Beschaffenheit einen Gehalt von 3 % bis 13 % eines hochwertigen Füllers (Steinmehl mit < 0,063 mm Korngröße) enthalten und muss mit etwa 3 % Wasser vorbefeuchtet sein, um eine Entmischung der Kornzusammensetzung bei Transport, Umschlag und Lagerung zu vermeiden. Spezialzusätze, wie Netzmittel (Verzögerungs-Tenside) und 0,1 bis 2 % Zement (Abbindebeschleuniger) werden als Steuerungsmittel zur Abstimmung auf die aktuelle Tagestemperatur und die Besonderheiten des Gesteins ebenfalls der Mischung zugesetzt.

Eine DDK ist in der Regel trotz der ursprünglich flüssig-breiförmigen Konsistenz des Mischgutes durch das Brechen und Abbinden der Bindemittelemulsion und eines rasch stattfindenden Kohäsionsaufbaus des Bindemittelfilmes schon innerhalb etwa einer halben Stunde durch den schonenden Verkehr befahrbar und wird auch durch diesen schrittweise verdichtet. Das Brechen und Abbinden wird durch eine elektrochemische Reaktion (Adsorption, pH-Wertverschiebung und dergleichen) zwischen Emulgatorsystem und den feinkörnigen Bestandteilen des Mineralkorngemisches eingeleitet. Eine klassische Verdichtung mit Walzen, wie sie bei der Heißasphalttechnologie unbedingt erforderlich ist, ist weder notwendig noch wäre sie zielführend.

Wenn ein Recyclingasphalt-Material im Heißverfahren gemäß Stand der Technik verarbeitet wird, kommt es erfahrungsgemäß stets zu einer Verschlechterung der Materialeigenschaften, da einerseits die Bindemitteleigenschaften durch Oxidation und Maltenverluste im Bitumen des Altasphaltes verhärten und andererseits das Gestein, insbesondere durch die Verkehrsbelastungen und weitergehend im Zuge der Fräsarbeiten zertrümmert und durch Mikrorisse vorgeschädigt wird. Das anfallende kornabgestufte Stückgut wird nach Zugabe über eine Paralleltrommel oder bei direkter Zugabe in den Zwangsmischer der Mischanlage soweit erhitzt, dass sich die Stückgutform weitgehend in ihre Bestandteile auflöst, das heißt, es wird das vorgeschädigte verhärtete Bindemittel wieder frei und auch die lastbedingt geschädigten kornabgestuften Bestandteile des Gesteins werden wieder frei und mit den neuen Zuschlagstoffen, wie frischem Bitumen und frischem Gestein, gemischt. Das macht die Zugabe von Bindemittelverbesserungsmitteln (sogenannte Rejuvenatoren, also Verjüngungsmittel) erforderlich. Üblicherweise wird das gesamte Recyclingasphalt-Material als Zuschlagstoff eingesetzt, was zwar den scheinbaren Vorteil einer vollständigen Nutzung aber dafür den Nachteil des Einbezugs stark vorgeschädigter Materialanteile hat. Diese stark vorgeschädigten Materialanteile finden sich vorwiegend in der Feinteilfraktion wieder. Die kaum vorgeschädigten Anteile hingegen finden sich jedoch in den gut erhaltenen gröberen Stücken im Bereich von 2 bis 16 mm wieder. Es findet also gewissermaßen im Fräs- oder Aufbrechprozess der Asphaltschollen eine Art Gütetrennung statt, daher brechen stärker geschädigte Strukturen zu feinen Stücken (0 bis 2 mm).

Die bisherige Tradition zeigt, dass Recyclingasphalt im Heißverfahren grundsätzlich besser dort eingesetzt werden soll, wo die Anforderungen niedriger sind, man spricht also von "Downgrading". Also ein Recyclingasphalt aus einem ehemals teuren und hochwertigen Deckschichtmaterial für hohe Belastungskategorien muss später als Zuschlag zu einem niedrigwertigeren Tragschichtmaterial oder einem Deckschichtmaterial für den ländlichen Wegebau eingesetzt werden, was einer Abwertung gleichkommt.

Die vorliegende Erfindung verfolgt die Zielsetzung, die beiden oben angeführten Regelbauweisen so zu konzipieren, dass die Wiederverwendung von Ausbauasphalt, also der Einsatz von Recyclingasphalt-Material oder von damit vergleichbarem Material möglich wird. Bei DDK können gemäß Erfindung die bisher gemäß Stand der Technik erforderlichen hochwertigen frisch anzuliefernden Gesteinszuschlagstoffe praktisch vollständig durch Recyclingasphalt-Zuschlagstoffe ersetzt werden. Die OB-Bauweise kann durch Kombinieren mit einer Recyclingasphalt-basierenden DDK-Bauweise nach dem erfindungsgemäßen Verfahren zu einer neuartigen Bauweise zur Herstellung von hochleistungsfähigen dünnen Deckschichten vereinigt werden.

Im Entwicklungslabor der Anmelderin wurde entgegen dem bisherigen Stand der Technik in umfangreichen Studien mit Recyclingasphalt-Materialien nämlich herausgefunden, dass die Forderung, eine DDK-Mischung müsse sorgfältig abgestimmte mineralische Füller (Gesteinsmehle) enthalten, unter Einhaltung gewisser Rahmenbedingungen keine Gültigkeit hat. Diese bahnbrechende und keinesfalls naheliegende technische Erkenntnis macht es möglich, Recyclingasphalt-Baustoffe nun erstmals in einem Kaltverfahren zu verarbeiten. Das Ziel, immer bedeutungsvoller werdende ressourcenschonende Bauverfahren zu entwickeln, wird in hervorragender Weise damit erreicht.

Transportwege zu Recyclingasphalt-Deponien und danach zu Heißmischanlagen, der Verbrauch von Heizenergie und von dort wieder lange Transportwege zu den Einbauorten können dadurch entfallen. Es kann künftig das bei Straßenerhaltungsarbeiten anfallende Asphaltausbruchmaterial, zumeist in Form von Asphaltschollen oder als Fräsgut, in der Nähe aufbereitet, klassiert und unmittelbar danach mit dem erfindungsgemäßen DDK-Bauverfahren wieder zu einer straßenerhaltungstechnisch hochwirksamen Deckschicht eingebaut werden.

Der Energieverbrauch und damit auch das CO₂-Äquivalent für Transport, Herstellung (wegfallende Trocknung und Aufheizung der Zuschlagstoffe!) und Einbau sind erheblich günstiger.

Die Erfindung ist unter anderem dadurch gekennzeichnet, dass ein kalt herstellbarer und einbaufähiger bituminöser Baustoff geschaffen wird, welcher ein Feststoffgranulat und Bindemittel enthält, wobei das Feststoffgranulat eine Korngröße von 2 mm oder größer aufweist und ein Konglomerat aus Steinkörnern und Bitumen ist. Dabei ist das Feststoffgranulat ein Recyclingasphaltgranulat mit einer Korngröße 2 mm bis 16 mm, bevorzugt 2 mm bis 11 mm, und mit nur geringem Anteil oder frei von Feinteilen.

In einer nicht erfindungsgemäßen Ausführung kann das Feststoffgranulat ein mit Bitumen ummanteltes Mineralgranulat, das im Anlieferungs- und Einbauzustand keine Feinanteile (< 2 mm) aufweist, sein.

Das Bindemittel umfasst eine hydrophobe und eine hydrophile Phase und bevorzugt ist das Bindemittel eine Emulsion mit Gehalt an paraffinischem Bitumen mit einer Säurezahl von weniger als 3 mg, bevorzugt 0 bis 2 mg KOH/g. Der Baustoff enthält bevorzugt zumindest 2,5 % Emulsion als Bindemittel, bezogen auf das Gesamtgewicht des Baustoffs.

Die hyprophobe Phase kann zusätzlich zu dem Bitumen ein bituminöses Additiv aus organischen und anorganischen Verbindungen, ausgewählt aus Palmitinsäure, Palmitolsäure, Stearinsäure, Ölsäure, Linol- und Linolensäure, triclyclische Diterpen-Carbonsäure, wie Abietin- und/oder Pimarsäure, anorganische und/oder organische Salze, sowie Paraffin C18 bis C50, enthalten.

Die hydrophile Phase enthält bevorzugt Wasser, Emulgatoren, wie Alkylamidoamin mit einem Kohlenwasserstoffrest C16 bis C24, gesättigt oder ungesättigt, Säure, bevorzugt Chlorwasserstoffsäure, und eine wässrige Dispersion eines Copolymers aus Styrol und 1,3 Butadien.

In einer vorteilhaften Ausgestaltung enthält das Bindemittel 24 bis 89 Gew.-% Bitumen und 11 bis 76 Gew.-% Additiv in der hydrophoben Phase und 80 bis 94 % Wasser, 1 bis 5 Gew.-% Emulgator, 1 bis 5 Gew.-% Chlorwasserstoffsäure und 1 bis 10 Gew.-% Polymer in der hydrophilen Phase.

Das Feststoffgranulat wird vorteilhaft mit zumindest 2 bis 10 Gew.-% hydrophobem Bindemittel und mit zumindest 2 bis 4 Gew.-% hydrophilem Bindemittel bezogen auf das Gesamtgewicht des Baustoffs vermischt und das Feststoffgranulat kann mit 0,1 bis 1 Gew.-% Zement als Reaktionsstarter vermischt sein.

In Weiterbildung der Erfindung wird eine kalteinbaufähige dünne Asphaltschicht geschaffen, die dadurch gekennzeichnet ist, dass sie aus dem eben beschriebenen Baustoff gebildet ist.

Zur Herstellung einer Asphaltdeckschicht im Kaltverfahren für den Straßen- und Wegebau wird der erfindungsgemäße Baustoff in einem Mischer vorgemischt auf den Straßen- oder Wegeunterbau aufgetragen. Alternativ kann das Feststoffgranulat in Form von Asphaltrecyclinggranulat mit der Korngröße 2 bis 11 mm auf eine mit dem Bindemittel beschichtete Straßen- oder Wegoberfläche gestreut und durch Walzen des Granulats allseitig mit dem Bindemittel ummantelt werden.

Weitere vorteilhafte Merkmale der Erfindung sind den Ansprüchen und der Beschreibung zu entnehmen.

In dieser Erfindung wird die oben beschriebene Vorselektierung des Recyclingasphalts nutzbringend eingesetzt. Es wird vorteilhaft bei der Verwendung in dünnen Schichten (DDK 5, DDK 8 oder DDK 11) aus dem Recyclingasphalt-Material eine Stückgutgrößenverteilung von 2 bis 5, 2 bis 8 oder 2 bis 11 Millimetern ausgesiebt, wie sie im DDK-Bauverfahren hauptsächlich gebraucht werden. Der feinkörnige, die minderwertige Qualität enthaltende Anteil wird nicht verwendet, kann aber für andere Zwecke noch sehr gut genützt werden, zum Beispiel als Beimischung zu ungebundenen Schichten im Straßenbau oder zu Künettenverfüllungen.

Das erfindungsgemäße Kaltverfahren bietet nun den besonderen Vorteil, dass es im Zuge des Herstellungs- und Einbauverfahrens zu keinem Zerstören der kompakten Recyclingasphalt-Stücke mehr kommt. Dadurch bleibt das kantige und sich gegenseitig mit hoher Reibung abstützende Kornhaufwerk erhalten. Ein erfindungsgemäßer DDK besteht also nicht aus Naturgestein, das nachträglich zur Gänze mit Bindemittel zusammengefügt werden muss, sondern aus einem schon gebundenen "unzerstörten Asphaltgestein", gewissermaßen also ein vorgefertigter vorverdichteter Asphalt, das lediglich im Zuges des Einbauverfahrens mit sich selbst verklebt werden muss. Das erfordert einerseits einen niedrigeren Bindemittelzusatz als es bei einer DDK gemäß bisherigem Stand der Technik der Fall ist und andererseits bietet der im "Asphaltgestein" enthaltene Asphaltmörtel eine besonders gute Kornverkeilung, da eine durch viskoses Fließen bedingte Abflachung der Berührungspunkte im Stückguthaufwerk zu einer besonders innigen und hohlraumarmen dichten Lagerung der Einzel-Asphaltkörner führt. Bei einem herkömmlichen DDK führt die Kornverkeilung hingegen zum spröden Brechen der Einzel-Gesteinskanten, was frische nicht vom Bindemittel bedeckte Zonen bewirkt, die eine schädigende Wassereinwirkung fördern können.

Bisher galt es gemäß Stand der Technik als völlig unmöglich, beim herkömmlichen DDK-Verfahren füllerfreie Zuschlagstoffe einzusetzen, da gerade der Füller, wie vorhin schon erläutert wurde, das Abbinden des Mischgutes aufgrund seiner großen Oberfläche erst einleitet. Die Erklärung dafür wird beim Betrachten des ausgesiebten Recyclingasphalt-Material-Stückgutes in einem 3D-Oberflächenmikroskop bei etwa 10-bis 40-facher Vergrößerung anschaulich geliefert. Ein derartiges Kornstück weist eine stark zerklüftete Oberfläche auf, in die eine Bitumenemulsion oder ein anderes erfindungsgemäßes Emulsionsbindemittel sehr gut eindringen kann. Es sind auch in diesen Kornkanülen und an der Stückgutoberfläche zahlreiche füllerähnliche blanke, aber am Stückgut fest anhaftende feinste Gesteinskörner aus dem Fräs- oder Aufbrechvorgang vorhanden, die mit dem beim Anmischprozess des DDK frisch zugesetzten Bindemittel eine Wechselwirkung eingehen können, sodass der Brech- bzw. Abbindevorgang eingeleitet wird. Das an sich vollständig schwarz und bedeckt aussehende Recyclingasphalt-Material täuscht über die wahre Natur der an sich inert aussehenden, in Wirklichkeit aber hochaktiv wirksamen Oberflächenbeschaffenheit hinweg. Dieser Umstand ist die Ursache dafür, dass bisher weder Forschungsstellen noch Baufachunternehmen innerhalb einer Periode von mehreren Jahrzehnten versucht haben, das DDK-Verfahren mit Recyclingasphalt-Materialien durchzuführen.

Im F&E-Labor der Anmelderin wurde herausgefunden, dass neben der Bindemittelgruppe "kationische Bitumenemulsionen" auch andere, konkret wasserreduzierte, kationische Bindemittelsysteme für die Herstellung eines erfindungsgemäßen neuartigen DDK geeignet sind. Die besondere Herausforderung dabei ist, dass diese Bindemittelsysteme erheblich höherviskos sind als Bitumenemulsionen, daher der bei Umgebungstemperatur auszuführende Mischvorgang einen zu hohen Energieaufwand erfordern würde und das erhaltene Mischgut auch nicht fließfähig genug wäre um in einem DDK-Bauverfahren verarbeitet zu werden. Das Problem konnte schließlich erfolgreich gelöst werden, in dem eine "Pseudoemulsion in statu nascendi" konzipiert wurde, die erfindungsgemäß aus Wasser und vom Löseverhalten her weichen bitumenartigen Stoffen zusammengesetzt ist, aber auch gänzlich frei von Erdölbitumen sein kann, nämlich aus bitumenähnlichen Naturstoffen, wie Erdpech, Tallpech, Stearinpech sowie gegebenenfalls auch deren weicheren naturbelassenen Vorstufen besteht. Das fehlende Wasser zum Erreichen des Emulsionszustandes wird dabei über die vorgefeuchtete oder lagertypisch naturfeuchte Recyclingasphalt-Ware in die DDK-Mischung eingebracht, muss also nicht separat bevorratet werden, sodass von dem an die Einbaustelle anzuliefernde Bindemittel eine erheblich niedrigere Menge im Vergleich zu Bitumenemulsionen notwendig ist. Es wurde auch herausgefunden, dass ein "Diffusionsverstärker" zur Optimierung der Durchführung des praktischen Bauverfahrens hilfreich ist, der sich durch eine Löslichkeitsvermittlung zwischen hydrophilen und hydrophoben Eigenschaften der Einbaumischung auszeichnet und auch insgesamt zur Erniedrigung der Viskosität beiträgt. Als Diffusionsverstärker eignen sich Stoffe aus der Gruppe biobasierender Alkohole mit bis zu 6 C-Atomen, Tenside oder kurzkettige Ester-Ether-Verbindungen, wie sie in gut umweltverträglichen Lösevermittlern in der Lack- und Reinigungsbranche eingesetzt werden.

Weiteres wurde von der Anmelderin auch gefunden, dass sich für ein DDK-Verfahren nicht nur Recyclingasphalt-Material sondern auch bituminiertes Naturgestein einer entsprechender Korngruppe (z.B. 0/8 mm), welches mit 0,5 bis maximal 3 % Bitumen, polymermodifiziertem Bitumen oder einem, den bituminösen Eigenschaften angepassten Harzbindemittel vorumhüllt wird, eignet. Durch diesen Granulierungsvorgang kann die Mineralabhängigkeit der kalten Dünnschicht von qualitativ geeigneten jedoch eingeschränkt vorhandenen Gesteinslieferquellen reduziert werden. Unter bituminöses Material fällt somit auch Mineralgranulat, das mit entsprechendem Natur- oder Kunstharz mit bitumenähnlichen Eigenschaften ummantelt ist.

Das erfindungsgemäße Bindemittel enthält Bitumen, bevorzugt hergestellt aus nicht venezolanischem Rohöl und enthält reaktiv wirkende Zusätze, die es ermöglichen, füllerfreies mit Bitumen ummanteltes Mineral einzubauen, insbesondere RecyclingAsphaltgranulat.

Die Roh- und Zuschlagstoffe bestehen aus Granulatkörnern, die aus Altasphalt gewonnen werden. Das Bindemittel kann Bitumen jeglicher Zusammensetzung enthalten, d.h. paraffinischer, naphtenischer, aromatischer oder asphaltenreicher Natur, Vorzugsweise wird paraffinisches Bitumen eingesetzt, welches billiger, da leichter verfügbar ist, als naphtenisches (venezolanisches) Bitumen.

Dem Kaltasphaltmischgut werden lediglich in geringen Mengen Zement und eventuell auch Wasser zugemengt. Weder die Zuschlagsstoffe noch das Asphaltrecyclinggranulat müssen getrocknet oder vorgeheizt werden.

Das Produkt erfüllt nach Reaktion, vollständiger Abtrocknung und erfolgter Rejuvenation nationale und internationale Straßenbauanforderungen wie z.B. RVS 08.16.05 oder die EN 12273.

Dieser neue bituminöse Baustoff ist umweltfreundlich, da er nicht nur energieeinsparend ist, sondern auch rohstoffeinsparend ist. Nicht endlos vorhandenes Hartgesteinsmaterial wird durch Recyclinggranulat ersetzt.

Während des Einbauens kommt es weder zu einer Geruchsbelästigung noch zu einer Sicherheitsgefährdung der Einbaumannschaft. Alle Roh- und Zuschlagsstoffe können bei Umgebungstemperatur verarbeitet werden.

Dem Bindemittel werden reaktionsauslösende Stoffe beigemengt, die es erlauben, nur mit geringen Mengen an Zement auch ohne grenzflächenaktive Feinteile (< 0,063 mm) eine Kohäsion aufzubauen. Zement wird dem derzeitigen Stand der Technik entsprechend zum Alkalisieren in geringen Mengen zugegeben.

Der Kohäsionsaufbau kann mit einem Standardtest nach DIN EN 12274-4 mit dem Benedikt Kohäsionsgerät bestimmt werden, Die vorliegende Erfindung zeigt vorteilhafterweise keinen Unterschied zu einem konventionell nach dem Stand der Technik hergestellten Mischgut, bestehend aus kornabgestuftem Mineral und kalter Dünnschichtemulsion, basierend auf naphtenischem Bitumen (SZ > 3 mg KOH/g).

Ein weiterer NORM Test DIN EN 12274-5 kann ebenfalls bei dieser neuen Erfindung angewandt werden. Der sogenannte WET track abrasion -Test. Auch bei diesem Testverfahren ist vorteilhafterweise kein Unterschied zum konventionell nach dem Stand der Technik hergestellten Mischgut feststellbar.

Den Funktionshintergrund stellt folgende Reaktion:
Das Bindemittel besteht aus Bitumen oder bitumenähnlichen Naturstoffen mit reaktionsauslösenden Zusätzen, einem Emulgator und Säure, um ca. 30 % Wasser ins Bindemittel einmischen zu können. Dieser bei Raumtemperatur flüssige Stoff reagiert mit Zement. Der reaktionsauslösende Zusatz entspricht einer bestimmten Zusammensetzung gemäß Tabelle der Ausführungsbeispiele. Er erzeugt binnen kurzer Zeit aufgrund des sehr niedrigen Wasseranteils im Mischgut einen enormen Viskositäts- und Kohäsionsanstieg. Der rasche Kohäsionsanstieg erlaubt es, das frisch verlegte Mischgut binnen kurzer Zeit zu befahren. Dabei werden die mit Bindemittel ummantelten Granulatkörper derart aneinander gepresst, dass ein weiterer Kohäsionsschub eintritt.

Die Endfestigkeit erreicht der Belag, nachdem die Rejuvenation zwischen frischem Bindemittel und dem Altbindemittel des Recyclingasphalts eingetreten ist. Nach erfolgter Einfahrzeit verringert sich der Hohlraumgehalt auf in der Asphalttechnologie gewünschte </ = 5 %.

Da das Wasser im Bindemittel zwischen den Bitumentröpfchen (1 bis 30 µm) verteilt ist und sich dort der Großteil des Emulgators befindet, bleibt das Bindemittel im Mischgut ca. 60 Sekunden mischstabil.

Die flüssige Konsistenz bleibt solange aufrecht, bis die Bitumentröpfchen koagulieren. Dem Bitumen sind reaktive Stoffe beigemischt, die mit dem Zement reagieren und den Übergang von einem hydrophilen zu einem hydrophoben Zustand einleiten.

Um diese Reaktion zu erhalten, ist kein spezielles Bitumen erforderlich, somit scheidet die gemäß dem Stand der Technik bestehende Abhängigkeit von einer bestimmten Bitumensorte aus, um spezielle Eigenschaften, wie zeitnahe Befahrbarkeit oder ein "Durchbrechen" im Schatten bei Oberflächentemperaturen von nur + 5 °C zu erhalten.

Die Gebrauchseigenschaften der Erfindung bleiben gegenüber Systemen gemäß dem Stand der Technik mit kornabgestuftem Mineral und kationischer stabiler Bitumenemulsion, basierend auf naphtenischem Venezuela Bitumen, unverändert positiv. Die Mischzeit, die mindestens 40 Sekunden und je nach Temperatur bis zu 120 Sekunden betragen kann, unterscheidet sich vorteilhafterweise nicht vom Stand der Technik. Der Brechprozess startet nach 2 Minuten. Die Festigkeitszunahme geht einher mit dem fortschreitenden Koagulieren des Bindemittels. Je nach Temperatur und Luftfeuchtigkeit ist der Prozess nach max. 20 Minuten abgeschlossen. Bitumen mit SZ < 2 mg KOH/g können gemäß Erfindung erstmals problemlos verarbeitet werden.

Der bituminöse Baustoff kann im kontinuierlichen Durchlaufmischverfahren hergestellt werden. Er bindet zeitnah ab und stellt weder einen zeitlichen noch einen kohäsiven Nachteil zum konventionell nach dem Stand der Technik hergestellten, kalten Dünnschichtbelag aus kornabgestuftem Sand-/Splittgemisch dar. Als Verlege- und Mischgerät können vorteilhafterweise konventionell am Markt erhältliche Verlegemaschinen für Kaltdünnschichten eingesetzt werden.

Obwohl dem in großen Mengen zur Verfügung stehenden Asphaltgranulat keine grenzflächenaktiven Feinteile, wie Gesteinsfüller, zugesetzt werden und dieses nur aus Recyclingasphaltkörnern besteht, stellt sich binnen kurzer Zeit ein derartiges Kohäsionsverhalten ein, dass die verlegte Schicht, die zwischen 5 und 25 mm pro Lage sein kann, zeitnah befahren werden kann. Großflächig vorhandene Unebenheiten können in einer Schichtstärke von max. 50 mm in 2 Arbeitsgängen und entsprechender Kornauswahl ausgeglichen werden, vorausgesetzt es handelt sich vorwiegend um Verkehrswege mit untergeordnetem Verkehrsaufkommen.

Die Erfindung wird vorzugsweise für Erhaltungsbaumaßnahmen im ländlichen Wegebau und/oder niederrangigen Straßenbau eingesetzt. Gemischt und aufgetragen wird dieser neue bituminöse Baustoff mit einer handelsüblichen Mikrobelag- oder Slurry Seal Maschine. Diese fahrbare Misch- und Einbaumaschine mischt recyclierte Granulatkörner, Bindemittel und einen geringen Anteil an Zementmenge ab und verteilt den Baustoff mittels eines Abziehkastens auf die gewünschte Schichtstärke.

Die Schichtdicke eines Belags gemäß der Erfindung kann im feuchtnassen Zustand bis zu 70 mm Schichtstärke in einem Auftrag betragen, vorausgesetzt es wird Granulat der Korngröße 2 bis 16 mm verwendet. Die Schichtdicke muss jedoch mindestens 5 mm im feuchtnassen Zustand betragen - bei Verwendung einer Recyclingasphaltkörnung von 2 bis 5 mm.

Vorzugsweise soll der neue Baustoff in 2 Arbeitsgängen als Profilschicht und anschließender Deckschicht aufgetragen werden. Die Nassschichtstärke kann pro Schicht jeweils 5 bis 35 mm betragen.

Die Erfindung kann aber auch im Asphaltneubau eingesetzt werden. Wird bituminiertes Hartgestein der Korngröße 2 bis 8 mm mit Bindemittel vermischt und auf die Oberfläche einer Heißasphalttragschicht aufgetragen, erfolgt die Verlegung in einem Guss in einer Nassschichtstärke von durchschnittlich 20 mm. Diese Variante ist auch für höheres Verkehrsaufkommen geeignet und erleichtert die Rohstoffverfügbarkeit der festen Komponente gegenüber konventionellem Mikro- oder Slurry Seal Belag.

Erstmals können mit diesen erfindungsgemäßen bituminösen Baustoffen Unebenheiten von durchschnittlich 40 mm dauerhaft ausgeglichen werden.

Die Anwendung der erfindungsgemäßen Belagsmischung wird vorzugsweise auf niederrangigen Straßen eingesetzt. Bei Verdrückungen und Senkungen können durch die Erfindung erstmals Höhenunterschiede bis zu 40 mm ausgeglichen werden. Risse in der Unterlage werden aufgrund des relativ hohen Gesamtbindemittelgehalts, resultierend aus dem schon vorhandenen Bindemittel im Recyclinggranulat und dem beim Einbau zugesetzten Bindemittel infolge Einsetzen des Rejuvenating-Effekts, weitgehend und dauerhaft überbrückt.

Diese erfindungsgemäße neue Belagsmischung, bestehend aus vorbitumiertem oder mit Harz beschichtetem Mineralgranulat, weist eine enorme Griffigkeit und Widerstandsfähigkeit auf, vorausgesetzt, es wird Gestein mit einem PSV-Wert von >/ = 50 vorbituminiert.

Diese Erfindung kann in Straßenabschnitten eingesetzt werden, wo Oberflächengriffigkeit gewünscht ist, speziell im Kreuzungsbereich, an Beschleunigungs- und Verzögerungsspuren und/oder Straßenabschnitten, die mangelhafte und/oder keine Griffigkeit aufweisen.

Die Erfindung betrifft somit einen neuen bituminösen Baustoff, wobei die feste, mineralische Phase erfindungsgemäß keine Feinteile (0 % < 0,063 mm) aufweist und die flüssige Phase neben Wasser vorzugsweise venezolearohölfreies Bitumen enthält. Dem Bitumen wird ein SZ-erhöhendes Stoffgemisch beigemengt. Dem Wasser ist ein Emulgator beigemengt, welcher mit der Salzsäure eine Verbindung eingeht.

### Beispiele für die Zusammensetzung der Bindemittel

Hydrophobe Bindemittelphase basierend auf paraffinischem Bitumen mit einer SZ von 0 bis 2 mgKOH/g

Zahlenangaben bedeuten Gewichtsteile:

| | **Variation** | |
|---|---|---|
| **Rohstoff** | **I** | **II** |
| Bitumen | 54 - 89 | 24 - 69 |
| Gemisch aus Palmitinsäure, Stearinsäure, Ölsäure | 5-15 | 15 - 40 |
| Gemisch aus Abietinsäure, Pimarsäure | 5-15 | 15 - 40 |
| Anorganisches Salz | 0,5 - 3 | 0,5-3 |
| Organisches Salz | 0,5 - 3 | 0,5-3 |
| Paraffinfraktion C18 - C50 | 0-10 | 0 - 10 |
| Polyalkohole C2 - C24 | 0-10 | 0-10 |

Die hydrophoben Phasen können mit hydrophiler Phase sowohl im Chargenbetrieb als auch im kontinuierlichen Produktionsprozess vermischt werden. Die beiden Phasen können bei Raumtemperatur flüssig sein.

Die hydrophile Phase des Bindemittels setzt sich wie folgt zusammen:

| | **Variation** | |
|---|---|---|
| **Rohstoff** | I | **II** |
| Wasser | 69 - 98 | 65 - 98 |
| Alkyl-amino-amidoamin | 1 -5 | 0-5 |
| Quaternäres Ammoniumsalz | 0-3 | 1 -5 |
| Betain | 0-3 | 1 -5 |
| Salzsäure | 1 -5 | 0-5 |
| Dispersion eines Copolymeres aus Styrol und Butadien | 0-10 | 0-5 |
| Dispersion eines 1,4-Polyisopren | 0-10 | 0-5 |
| Dispersion eines 2-Chlor Butadiens | 0-10 | 0-5 |

Für die kontinuierliche Produktion der Bitumenemulsion kann Variation I der hydrophoben Phase mit Variation I der hydrophilen Phase kombiniert werden. Die Lagerstabilität dieses Emulsionstyps beträgt mindestens 12 Wochen.

| **Formulierungskombination** | **Phase** | |
|---|---|---|
| | hydrophob | hydrophil |
| | I | I |
| A | 60 - 70 | 40 - 30 |

Für die diskontinuierliche Produktion des Bindemittels kann Variation II der hydrophoben Phase mit Variation II der hydrophilen Phase kombiniert werden. Die Lagerstabilität dieses Emulsionstyps beträgt mindestens 8 Wochen.

| Formulierungskombination | Phase | |
|---|---|---|
| | hydrophob | hydrophil |
| | II | II |
| B | 80 - 90 | 10-20 |

Der ph-Wert der Emulsion/Dispersion beträgt beim kontinuierlichen Prozess zwischen 1 und 3 und beim Chargenprozess zwischen 1 und 5.

Das Bitumen vorwiegend paraffinhältiger Verbindungen mit einer SZ von 0 bis 2 mg KOH/g kann zwischen einer Penetrationsklasse von 10/20 bis 160/220 liegen, vorzugsweise 50/70.

Das einzusetzende Bitumen soll ein rein destillativ hergestelltes Produkt sein, ohne jegliche Zusätze. Die Erweichungspunktzunahme gem. ÖNORM EN 14769 nach PAV-Alterung soll maximal 15 °C betragen.

Dem Bitumen werden vor dem Vereinigungsprozess mit Wasser viskositätserniedrigende Stoffe bzw. Stoffgemische organischer und anorganischer Natur beigemengt. Dies können gesättigte und/oder ungesättigte Fettsäuren und/oder Fettsäurederivate, anorganische oder organische Salzverbindungen basierend auf Na+ und/oder K+ sein.

Das zu additivierende reaktionsauslösende Stoffgemisch kann aus 60 bis 70 % Palmitinsäure, Palmitolsäure, Stearinsäure, Ölsäure, Linol- und Linolensäure, 1 bis 30 % triclyclische Diterpen-Carbonsäure - wie Abietin- und/oder Pimarsäure - 1 bis 10 % anorganischen und/oder organischen Salzen, 1 bis 10 % Paraffin der Fraktion C18 bis C50 bestehen.

Dem Bitumen wird vor dem Vereinigungsprozess mit Wasser 5 bis 76 % des reaktionsauslösenden Stoffgemisches beigemengt.

Der hydrophilen Phase des Bindemittels kann sowohl synthetischer Latex oder Naturlatex vor dem Vereinigungsprozess mit der hyrophoben Phase zugegeben werden.

Nach dem Vereinigungsprozess der hydrophoben und hydrophilen Phase kann dem Bindemittel eine Polyvinylacetat-Dispersion mit einem pH-Wert nach DIN 53785 von weniger als 4,5 zugesetzt werden - vorzugsweise zwischen 1 bis 3 Gew.-% auf Gesamtbindemittel, dies dient alternativ der Elastomermodifizierung der Bindemittelphase.

Dem Bindemittel werden Emulgatoren zugegeben, um die beiden nicht miteinander mischbaren Phasen zu stabilisieren. Diese grenzflächigen aktiven Substanzen treten mit der Salzsäure in Verbindung. Nach erfolgter Protonierung stabilisiert das entstandene Hydrochlorid die beiden Phasen.

Als Emulgatoren können vorzugsweise folgende grenzflächenaktive Stoffe eingesetzt werden:
- Ethylenamine
- Reaktionsprodukte aus Alkylamidaminen und Tetraethylenpentamin
- Organische Ester
- Der Kohlenwasserstoffrest bewegt sich zwischen 8 und 24 C-Atomen.

Dem Emulgator können vorzugsweise noch Betaine und/oder quartäre Ammoniumsalze beigemengt werden. Die Beigabemenge kann jeweils 0 bis 2 Gew.-% betragen.

Das erfindungsgemäße Bindemittel darf keine oxyethylierten oder oxypropylierten Derivate beinhalten, wie es aber in anderen Formulierungen Stand der Technik ist.

Dem erfindungsgemäßen Bindemittel werden Neutralsäuren beigemengt, vorzugsweise Chlorwasserstoffsäure. Dem Bindemittel kann auch eine mehrprotonige Säure beigemengt werden, um die Ionisierung der Aminfraktionen der Emulgatorgemische in der hydrophilen Phase einzuleiten. Der pH-Wert der hydrophilen Phase des Bindemittels liegt zwischen 0 und 5, vorzugsweise zwischen 2 und 3.

Die Höhe der Emulgatorendosierung in der hydrophilen Phase muss so gewählt sein, dass ein Koagulieren der Emulsionströpfchen innerhalb von mindestens 30 Sekunden bis max. 120 Sekunden bei Kontakt mit grenzflächenaktiven Stoffen eintritt, obwohl im Gegensatz zum Stand der Technik mineralische Feinteile nicht vorhanden sind. Nach erfolgter Reaktion steigt der ph-Wert von 0 bis 5 auf 8 bis 10. Dabei kommt es zwischen den verflüssigenden Bestandteilen im Bitumen und dem geringen Anteil an Zement zu einer Reaktion.

Der kalt gemischte und kalt aufgetragene bituminöse Baustoff kann als feste Komponente 100%ig aufbereiteten Recyclingasphalt ohne Feinteile vorzugsweise 2 bis 5 mm enthalten. Die feste Komponente kann aber auch aus 100 % ummanteltem, bituminiertem Mineral bestehen.

Die Ummantelung der festen Komponente kann sowohl aus Bitumen als auch aus auf Bitumeneigenschaften abgestimmten Kunstharzgemischen bestehen. Dieses auf synthetischem Wege hergestellte bitumenartige Bindemittel kann aus Kohlenwasserstoffharzen, Kolophonium, Tallpech und paraffinischen Fluxölen (C20 bis C40) bestehen. Die Bindemittelmenge liegt je nach Höhe der enthaltenen Feinteile zwischen 1 bis 3 %. Vorzugsweise wird Mineral der Korngröße 2 bis 5 mm eingesetzt.

Bituminiertes Mineral besteht vorzugsweise aus der Korngröße 0 bis 8 mm und wird mit 1 bis 2 % Bitumen PEN 10 - 80 vollständig ummantelt, was zu einer weitgehenden Unabhängigkeit von für Dünnschichtbeläge speziell notwendigen Mineralmischungen führt. Dem Recyclinggranulat kann sowohl bituminierter Sand der Korngröße 0 bis 3 mm als auch bituminierter Sand bestehend aus 100 % Recyclingasphalt zugegeben werden.

Der feste Bestandteil gemäß Erfindung enthält keine grenzflächenaktiven Gesteinsfüller, wie sie beim Brechen eines Slurry Seal oder kalten Dünnschichtbelags-Mischgutes nach dem Stand der Technik notwendig sind.

Die feste Komponente der Erfindung wird mit mindestens 6 bis 10 % hydrophobem und 2 bis 4 % hydrophilem Bindemittelanteil vermischt.

Der Gesamtbindemittelgehalt des erfindungsgemäßen Baustoffs kann, bedingt durch das im Recyclingasphalt vorhandene Bitumen, zwischen 10,0 und 15,0 Gew.-% liegen.

Der festen Komponente - vorzugsweise Recyclingasphaltgranulat Korngröße 2 bis 5 mm, 2 bis 8 mm, 2 bis 11 mm und 2 bis 16 mm - wird ein Zement als Bindemittel in der Größenordnung von 0,1 bis 1 Gew.-% beigemengt, um eine chemische Reaktion einzuleiten und damit den Kohäsionsaufbau zu starten.

Die Kombination dieses neuen kalt verarbeitbaren bituminösen Baustoffes, nämlich der festen Komponente mit der flüssigen Komponente, oder im speziellen Recyclingasphaltgranulat mit aliphatischem Bindemittel, bringt in ausgehärtetem Zustand eine Erhöhung des Erweichungspunktes um mindestens 10 °C. Der gehärtete und verdichtete Belag weist dabei einen Hohlraumgehalt von </ = 5 % auf.

Die alternative Kombination dieses neuen kalt verarbeitbaren bituminösen Baustoffes, nämlich der festen mit flüssiger Komponente, im Speziellen 100 % mit Bitumen ummanteltes Mineral der Korngröße 0 bis 5 mm, 0 bis 8 mm oder 2 bis 11 mm, bringt im rejuvenierten Zustand keine Erhöhung des Erweichungspunktes. Der gehärtete und verdichtete Belag weist einen Hohlraumgehalt im abgebundenen und rejuvenierten Zustand von </ = 5 % auf.

Vorteile sind unter anderem:
- Durch die veränderte Gesteinskomponente zeigt der Baustoff in der Praxis vorteilhaftere Eigenschaften hinsichtlich Flexibilität, Verdrückung und Ebenflächigkeit, sowie in der Schwitzneigung.
Bei dem erfindungsgemäßen neuen Baustoff kann sich durch das Fehlen der Feinanteile in der festen Komponente kein bituminöser Mörtel bilden, wie es derzeit Stand der Technik ist. Bei dem neuen Baustoff verkeilen sich die aus der festen Komponente enthaltenen Recyclingasphaltgranulatkörner zu einer hoch standfesten Belagsschicht. Die fließfähige Bitumen-Füller-Feinanteilkomponente (=bituminöser Mörtel), wie sie beim derzeitigen Stand der Technik zwingend notwendig ist, beschleunigt zwar die Verdichtung, verschlechtert jedoch die Ebenflächigkeit und fördert Verdrückungen in der aufgebrachten Belagsschicht. Das Anreichern von Bindemittel an der Asphaltoberfläche, wie es bei derzeitigen Kombinationsbauweisen auftritt, findet beim erfindungsgemäßen neuen Baustoff nicht statt, da das nach Rejuvenation entstandene Bindemittel einen sehr hohen Erweichungspunkt aufweist. Weiche, rissverschließende Oberflächenbehandlungen - sogenannte Membranschichten, wie sie derzeit in Kombination mit kalter Dünnschicht eingesetzt werden (zur dauerhaften Hintanhalten von Rissbildung in der Straße), werden somit hinfällig, da dieser neue Baustoff sowohl die Rissbildung vermindert, als auch die Bindemittelanreicherung an der Oberfläche. Ursächlich dafür verantwortlich ist der nach Rejuvenation vorhandene Erweichungspunktanstieg in Kombination mit der erhöhten Bindemittelmenge. Derzeitiger Standardbindemittelanteil liegt bei 5,0 bis 6,0 %, beim neuen Werkstoff liegt der Bindemittelanteil bei 9,0 bis 10,0 %.
Typische Kennwerte nach erfolgter Rejuvenation, konventionelle Messmethode:

| | |
|---|---|
| Nadelpenetration [1/10 mm] | 47 |
| Erweichungspunkt Ring und Kugel [°C] | 56,8 |

- Herstellung auf der Basis günstiger und in ausreichender Menge verfügbarer venezuelarohölfreier Standardbitumina.
Demgegenüber sind gemäß Stand der Technik kalt verarbeitbare Bindemittel ausschließlich bzw. vorwiegend aus Bitumen herzustellen, dessen Rohöl venezolanischen Ursprungs ist. Die natürlich vorkommende Zusammensetzung der einzelnen Stoffgruppen, die in diesem Bitumen grundsätzlich enthalten sind, entscheiden über Erfolg der notwendigen Gebrauchseigenschaften, was hohe Kosten verursacht.
- Energiesparende und gesundheitlich unbedenkliche kalte Herstellung und Einbau des Baustoffes
- Rasches Ansteigen der Festigkeit durch Beimischung eines besonderen reaktiv wirkenden Stoffgemisches
- Einbau auf konventionelle Art und Weise gemäß Stand der Technik
- Einbau in Lagen bis zu 50 mm
- Durch die Kombinationsmöglichkeit der verschiedenen Phasen können unterschiedliche straßenbauliche Erhaltungs- und Erneuerungstechniken der Oberflächentechnologie abgedeckt werden.
- Verwertung von Recyclingasphalt möglich

### Ausführungsbeispiele

### 1. Mischrezeptur Rohstoffbasis Recyclingasphalt:

- Mischgutherstellung im Durchlaufmischverfahren,
- Durchflussmengenangabe pro Minute,
- 1000 kg Recyclingasphaltgranulat 2 bis 5 mm,
- 10 kg Zement,
- 60 kg Formulierungskombination Emulsion A.

### 2. Mischrezeptur Rohstoffbasis Recyclingasphalt:

- Mischgutherstellung im Chargenmischverfahren,
- Chargengröße ca. 1000 kg,
- 1000 kg Recyclingasphaltgranulat > 2 mm,
- 30 kg Formulierungskombination Emulsion B.

### 3. Mischrezeptur Rohstoffbasis bitumenummantelte Gesteinskörner:

- Mischgutherstellung im Durchlaufmischverfahren,
- Durchfluss Mengenangabe pro Minute,
- 1000 kg vorumhülltes, bituminiertes Mineral, Stückgutgröße 2 bis 5 mm,
- 10 kg Zement,
- 60 kg Formulierungskombination Emulsion A.

### 4. Mischrezeptur Rohstoffbasis Natur- oder Kunstharzummantelte Gesteinskörner:

- Mischgutherstellung im Durchlaufmischverfahren,
- Durchflussmenge Mengenangabe pro Minute,
- 1000 kg mit Bindemittel vorumhülltes Mineral, Stückgutgröße 2 bis 5 mm,
- 10 kg Zement,
- 60 kg Formulierungskombination Emulsion A.

## Patentansprüche

1. Kalt herstellbarer und einbaufähiger bituminöser Baustoff, welcher ein Feststoffgranulat und Bindemittel enthält, zum Kalteinbau von dünnen Schichten mit einer Dicke von bis zu 70 mm pro Lage, bevorzugt zwischen 5 mm und 35 mm pro Lage, wobei das Feststoffgranulat eine Korngröße von 2 mm oder größer aufweist und ein Konglomerat aus Steinkörnern und Bitumen ist, und wobei das Bindemittel eine hydrophobe und eine hydrophile Phase umfasst, **dadurch gekennzeichnet, dass** das Feststoffgranulat ein Recyclingasphaltgranulat mit einer Korngröße 2 mm bis 16 mm, bevorzugt 2 mm bis 11 mm, ist, und dass das Recyclingasphaltgranulat keine zugesetzten grenzflächenaktiven Feinteile kleiner als 0,063 mm enthält.

2. Baustoff nach Anspruch 1, **dadurch gekennzeichnet, dass** das Bindemittel eine Emulsion mit Gehalt an paraffinischem Bitumen mit einer Säurezahl von weniger als 3 mg, bevorzugt 0 bis 2 mg KOH/g, ist.

3. Baustoff nach einem der Ansprüche 1 oder 2, **dadurch gekennzeichnet, dass** die hydrophobe Phase zusätzlich zu dem Bitumen ein bituminöses Additiv aus organischen und anorganischen Verbindungen, ausgewählt aus Palmitinsäure, Palmitolsäure, Stearinsäure, Ölsäure, Linol- und Linolensäure, triclyclische Diterpen-Carbonsäure, wie Abietin- und/oder Pimarsäure, anorganische und/oder organische Salze, sowie Paraffin C18 bis C50, enthält.

4. Baustoff nach einem der Ansprüche 1 bis 3, **dadurch gekennzeichnet, dass** die hydrophile Phase Wasser, Emulgatoren, wie Alkylamidoamin mit einem Kohlenwasserstoffrest C16 bis C24, gesättigt oder ungesättigt, Säure, bevorzugt Chlorwasserstoffsäure, und eine wässrige Dispersion eines Copolymers aus Styrol und 1,3 Butadien enthält.

5. Baustoff nach einem der Ansprüche 1 bis 4, **dadurch gekennzeichnet,**
- **dass** der Baustoff als Bindemittel zumindest 2,5 % Emulsion, bezogen auf das Gewicht des Baustoffs, enthält, und
- **dass** das Bindemittel enthält:
∘ 24 bis 89 Gew.-% Bitumen und 11 bis 76 Gew.-% Additiv in der hydrophoben Phase, bezogen auf das Gewicht der hydrophoben Phase, und
∘ 80 bis 94 % Wasser, 1 bis 5 Gew.-% Emulgator, 1 bis 5 Gew.-% Chlorwasserstoffsäure und 1 bis 10 Gew.-% Polymer in der hydrophilen Phase, bezogen auf das Gewicht der hydrophilen Phase.

6. Baustoff nach einem der Ansprüche 1 bis 5, **dadurch gekennzeichnet, dass** das Feststoffgranulat mit zumindest 2 bis 10 Gew.-% hydrophobem Bindemittel und mit zumindest 2 bis 4 Gew.-% hydrophilem Bindemittel bezogen auf das Gesamtgewicht des Baustoffs vermischt ist.

7. Baustoff nach einem der Ansprüche 1 bis 6, **dadurch gekennzeichnet, dass** das Feststoffgranulat mit 0,1 bis 1 Gew.-% Zement auf das Gewicht des Feststoffgranulats bezogen als Reaktionsstarter vermischt ist.

8. Kalteinbaufähige dünne Asphaltschicht, **dadurch gekennzeichnet, dass** sie aus einem Baustoff nach einem der Ansprüche 1 bis 7 gebildet ist.

9. Verfahren zur Herstellung einer dünnen Asphaltdeckschicht mit einer Dicke von 5 bis 25 mm im Kaltverfahren für den Straßen- und Wegebau, **dadurch gekennzeichnet, dass** der Baustoff gemäß einem der Ansprüche 1 bis 7 in einem Mischer vorgemischt auf den Straßen- oder Wegeunterbau aufgetragen wird.

10. Verwendung von gebrochenem oder gefrästem Recyclingasphalt mit Granulatgröße zwischen 2 und 16 mm als Feststoffgranulat zur Herstellung eines kalt herstellbaren und einbaufähigen bituminösen Baustoffs gemäß einem der Ansprüche 1-7.

## Claims

1. A bituminous building material, which can be produced and laid cold and which contains solid granules and a binder, for the cold laying of thin layers with a thickness of up to 70 mm per layer, preferably between 5 mm and 35 mm per layer, wherein the solid granules have a particle size of 2 mm or more and are a conglomerate of crushed stone and bitumen, and wherein the binder comprises a hydrophobic phase and a hydrophilic phase, **characterized in that** the solid granules are recycled asphalt granules with a particle size of 2 mm to 16 mm, preferably 2 mm to 11 mm, and **in that** the recycled asphalt granules do not contain added surfactant fines smaller than 0.063 mm.

2. The building material according to claim 1, **characterized in that** the binder is an emulsion containing paraffinic bitumen with an acid value of less than 3 mg, preferably 0 to 2 mg KOH/g.

3. The building material according to one of claims 1 or 2, **characterized in that** the hydrophobic phase contains, in addition to the bitumen, a bituminous additive of organic and inorganic compounds selected from palmitic acid, palmitolic acid, stearic acid, oleic acid, linoleic and linolenic acid, triclyclic diterpene carboxylic acid, such as abietic and/or pimaric acid, inorganic and/or organic salts, and paraffin C18 to C50.

4. The building material according to one of claims 1 to 3, **characterized in that** the hydrophilic phase contains water, emulsifiers, such as alkylamidoamine with a hydrocarbon group C16 to C24, saturated or unsaturated, acid, preferably hydrochloric acid, and an aqueous dispersion of a copolymer of styrene and 1,3 butadiene.

5. The building material according to one of claims 1 to 4, **characterized**
- **in that** the building material contains as a binder at least 2.5 % emulsion, based on the weight of the building material, and
- **in that** the binder contains:
∘ 24 to 89 wt. % bitumen and 11 to 76 wt. % additive in the hydrophobic phase, based on the weight of the hydrophobic phase, and
∘ 80 to 94 wt. % water, 1 to 5 wt. % emulsifier, 1 to 5 wt. % hydrochloric acid and 1 to 10 wt. % polymer in the hydrophilic phase, based on the weight of the hydrophilic phase.

6. The building material according to one of claims 1 to 5, **characterized in that** the solid granules are mixed with at least 2 to 10 wt. % hydrophobic binder and with at least 2 to 4 wt. % hydrophilic binder, based on the total weight of the building material.

7. The building material according to one of claims 1 to 6, **characterized in that** the solid granules are mixed with 0.1 to 1 wt. % cement, based on the weight of the solid granules, as a reaction starter.

8. A thin asphalt layer suitable for cold laying, **characterized in that** it is formed from a building material according to one of claims 1 to 7.

9. A method of producing a thin asphalt surface layer with a thickness of 5 to 25 mm by the cold method for road and path construction, **characterized in that** the building material according to one of claims 1 to 7 is premixed in a mixer and applied to the road or path substructure.

10. A use of crushed or milled recycled asphalt with a granule size between 2 and 16 mm as solid granules for the production of a bituminous building material according to one of claims 1 to 7, which can be produced and laid cold.

## Revendications

1. Un matériau de construction bitumineux pouvant être fabriqué et posé à froid, qui contient un granulat solide et un liant, pour la pose à froid de couches minces d'une épaisseur allant jusqu'à 70 mm par couche, de préférence entre 5 mm et 35 mm par couche, dans lequel le granulat solide a une granulométrie de 2 mm ou plus et est un conglomérat de grains de pierre et de bitume, et dans lequel le liant comprend une phase hydrophobe et une phase hydrophile, **caractérisé en ce que** le granulat solide est un granulat d'asphalte recyclé ayant une granulométrie de 2 mm à 16 mm, de préférence de 2 mm à 11 mm, et **en ce que** le granulat d'asphalte recyclé ne contient pas de particules fines ajoutées tensioactives inférieures à 0,063 mm.

2. Le matériau de construction selon la revendication 1, **caractérisé en ce que** le liant est une émulsion contenant du bitume paraffinique ayant un indice d'acide de moins de 3 mg, de préférence 0 à 2 mg KOH/g.

3. Le matériau de construction selon l'une des revendications 1 ou 2, **caractérisé en ce que** la phase hydrophobe contient, en plus du bitume, un additif bitumineux de composés organiques et inorganiques choisis parmi l'acide palmitique, l'acide palmitolique, l'acide stéarique, l'acide oléique, l'acide linoléique et linolénique, l'acide diterpène carboxylique triclyclique, tel que l'acide abiétique et/ou pimarique, les sels inorganiques et/ou organiques, et la paraffine C18 à C50.

4. Le matériau de construction selon l'une des revendications 1 à 3, **caractérisé en ce que** la phase hydrophile contient de l'eau, des émulsifiants, tels que l'alkylamidoamine à radical hydrocarboné C16 à C24, saturé ou insaturé, un acide, de préférence l'acide chlorhydrique, et une dispersion aqueuse d'un copolymère de styrène et de 1,3 butadiène.

5. Le matériau de construction selon l'une des revendications 1 à 4, **caractérisé**
- **en ce que** le matériau de construction contient au moins 2,5 % d'émulsion, par rapport au poids du matériau de construction, comme liant, et
- **en ce que** le liant contient:
∘ 24 à 89 % en poids et 11 à 76 % en poids d'un additif dans la phase hydrophobe, par rapport au poids de la phase hydrophobe, et
∘ 80 à 94 % d'eau, 1 à 5 % en poids d'émulsifiant, 1 à 5 % en poids d'acide chlorhydrique et 1 à 10 % en poids d'un polymère dans la phase hydrophile, par rapport au poids de la phase hydrophile.

6. Le matériau de construction selon l'une des revendications 1 à 5, **caractérisé en ce que** le granulat solide est mélangé avec au moins 2 à 10 % en poids du liant hydrophobe et avec au moins 2 à 4 % en poids du liant hydrophile, par rapport au poids total du matériau de construction.

7. Le matériau de construction selon l'une des revendications 1 à 6, **caractérisé en ce que** le granulat solide est mélangé avec 0,1 à 1 % en poids de ciment, par rapport au poids du granulat solide, comme initiateur de réaction.

8. Une couche d'asphalte pouvant être posée à froid, **caractérisée en ce qu'**elle est formée par un matériau de construction selon l'une des revendications 1 à 7.

9. Un procédé de fabrication d'une mince couche de revêtement d'asphalte d'une épaisseur de 5 à 25 mm par le procédé à froid pour la construction de routes et de chemins, **caractérisé en ce que** le matériau de construction selon l'une des revendications 1 à 7 est prémélangé dans un mélangeur et appliqué sur l'infrastructure de la route ou du chemin.

10. Une utilisation d'asphalte recyclé concassé ou broyé avec une granulométrie entre 2 et 16 mm comme granulat solide pour la production d'un matériau de construction bitumineux pouvant être fabriqué et posé à froid selon l'une des revendications 1 à 7.
